Europäisches Patentamt

European Patent Office

Office européen des brevets

(19)

(11) EP 0 698 201 B1

(12) FASCICULE DE BREVET EUROPEEN

(45) Date de publication et mention
de la délivrance du brevet:
**01.10.1997 Bulletin 1997/40**

(21) Numéro de dépôt: **94915604.6**

(22) Date de dépôt: **10.05.1994**

(51) Int Cl.⁶: **F25B 31/00**, F25B 45/00,
F16N 31/00, A62D 3/00

(86) Numéro de dépôt international:
**PCT/FR94/00548**

(87) Numéro de publication internationale:
**WO 94/27100 (24.11.1994 Gazette 1994/26)**

(54) **PROCEDE DE REMPLACEMENT DU PRODUIT DE LUBRIFICATION DANS DES SYSTEMES DE REFRIGERATION**

VERFAHREN ZUM AUSTAUSCHEN VON SCHMIERMITTEL IN KÄLTEANLAGEN

METHOD OF REPLACEMENT OF A LUBRICANT IN COOLING SYSTEMS

(84) Etats contractants désignés:
**AT BE CH DE DK ES FR GB GR IE IT LI LU MC NL
PT SE**

(30) Priorité: **11.05.1993 FR 9305618**

(43) Date de publication de la demande:
**28.02.1996 Bulletin 1996/09**

(73) Titulaire: **ELF ANTAR FRANCE
92400 Courbevoie (FR)**

(72) Inventeurs:
• **GAY, Marie-Noelle
F-69007 Lyon (FR)**
• **GENET, Nicole
F-69007 Lyon (FR)**
• **SANVI, Pierre
F-69320 Vernaison (FR)**

(74) Mandataire: **Boillot, Marc
Elf Exploration Production
Département Propriété Industrielle
Tour Elf
EP/T/RD/DPI - Bureau 34 G 47
92078 Paris La Défense Cedex (FR)**

(56) Documents cités:
EP-A- 0 147 860     US-A- 4 199 461
US-A- 4 944 890     US-A- 5 174 906

• KOUDE MAGAZINE, vol.4, no.4, Avril 1992,
ZEIST NL pages 22 - 27 GRAHAM CARROLL
'SMEERMIDDELEN VOOR TOEKOMSTIGE
KOELSYSTEMEN'

**Description**

La présente invention vise un procédé de remplacement du lubrifiant présent dans le circuit de lubrification de systèmes de réfrigération existant lors de leur conversion à des fluides frigorigènes n'ayant aucune action sur l'ozone atmosphérique. Il s'agit du changement de lubrifiant quand on remplace les fluides frigorigènes chlorofluorocarbonés présents dans ces systèmes par des fluides frigorigènes hydrofluorocarbonés.

Ce problème de conversion des systèmes frigorifiques existants est une urgence au sein du monde actuel. D'une part, les composés chlorofluorocarbonés dits CFC comme le dichlorodifluorométhane ou R12, sont nuisibles à la couche d'ozone de notre atmosphère terrestre. D'autre part, ceux-ci étant nuisibles, il a été décidé de cesser leur fabrication à l'horizon de l'année 1995 dans les pays signataires du protocole de Montréal de 1987.

Bien entendu, dans l'industrie, que ce soit dans les domaines de la réfrigération ou dans ceux de la climatisation, de nombreuses recherches ont eu lieu pour développer des produits de substitution de ces composés chlorofluorocarbonés dont les caractéristiques requises sont d'être à la fois un bon fluide frigorigène et de ne pas nuire à la couche d'ozone. Les meilleurs produits trouvés et commercialisés sont les composés hydrofluorocarbonés dit HFC dont le plus connu est le 1,1,1,2-tétrafluoroéthane ou encore R134a. Ils ont donc rapidement été utilisés dans tous les nouveaux matériels fabriqués.

Cependant, l'homme de métier n'a pas encore complètement résolu le problème du remplacement de ces fluides frigorigènes obsolètes par les nouveaux produits dans les matériels existants.

En effet, dans les systèmes de réfrigération, les fluides frigorigènes sont constamment en contact avec une faible quantité de lubrifiant, provenant du circuit de lubrification du compresseur dans le système de réfrigération. Or, on a constaté que les lubrifiants compatibles avec les fluides frigorigènes du type CFC (chlorofluorocarboné) n'étaient plus adaptés aux fluides frigorigènes de type HFC (hydrofluorocarboné) et qu'ils pouvaient provoquer des dysfonctionnements des systèmes de réfrigération. Ainsi, du fait du peu de miscibilité du couple lubrifiant-fluide frigorigène des films de lubrifiant se déposent sur le conduit des condenseurs et les parois internes de l'évaporateur, diminuant ainsi considérablement l'efficacité de l'échange thermique ou encore, l'absence de lubrifiant génère des zones d'usures au niveau des pièces en mouvement du compresseur. Il est donc essentiel de s'assurer de la bonne miscibilité du couple lubrifiant-fluide frigorigène, si on veut sauvegarder les performances refroidissantes du système.

Les lubrifiants traditionnels à base d'huile minérale ou d'huile de synthèse connus pour leur miscibilité avec les composés chlorofluorocarbonés tels que le R12 ne conviennent donc pas sur le plan de la miscibilité aux nouveaux composés hydrofluorocarbonés tels que le R134a. Cependant, il est connu que les lubrifiants compatibles avec les HFC sont généralement compatibles avec les CFC préexistants. Aussi, avant de remplacer les composés chlorofluorocarbonés par les composés hydrofluorocarbonés dans le circuit de réfrigération, on va vidanger complètement le circuit de lubrification du système de compression en vue d'éliminer toute trace de lubrifiant non compatible avec les composés hydrofluorocarbonés.

Cependant, comme les circuits de lubrification des systèmes de réfrigération comportent des volumes morts inaccessibles, la seule vidange ne permet pas d'éliminer tout le lubrifiant. Actuellement, l'homme du métier procède par rinçage répété du circuit de lubrification avec le nouveau lubrifiant, chaque rinçage étant suivi d'une mise en fonctionnement du système de réfrigération pendant au moins quarante huit heures, jusqu'à élimination quasi complète du lubrifiant précédent, c'est-à-dire pour une concentration résiduelle de celui-ci de moins de 1% dans le nouveau lubrifiant. Un tel procédé est décrit dans le document KOUDE MAGAZINE vol. 4, no. 4, Avril 1992, pages 22-27.

Cependant, on comprendra bien vite qu'étant donné la spécificité des lubrifiants utilisés avec les fluides frigorigènes, de tels rinçages sont très onéreux compte tenu des volumes nécessaires de lubrifiant pour vidanger ces circuits.

Bien que beaucoup de sociétés aient recherché de nouvelles compositions de lubrifiants compatibles avec les nouveaux fluides frigorigènes hydrofluorocarbonés tels que le R134a, relativement peu se sont intéressées au procédé de remplacement du lubrifiant dans le circuit de lubrification et de l'incidence de produits résiduels dans ces nouveaux lubrifiants.

Seul CASTROL, dans sa demande de brevet EP-468729, suggère qu'on peut tolérer une concentration maximum de 5% en poids de lubrifiant compatible avec les fluides réfrigérants CFC dans le nouveau lubrifiant compatible avec les fluides réfrigérants HFC.

Pour plus de clarté dans la suite de la présente description, nous appellerons "lubrifiant CFC", les lubrifiants compatibles avec les fluides frigorigènes de type chlorofluorocarboné appelés fluides CFC et "lubrifiant HFC", les lubrifiants compatibles avec les fluides frigorigènes de type hydrofluorocarboné appelés fluides HFC.

Le but de la présente invention est donc de proposer un moyen de remplacer le lubrifiant CFC par un lubrifiant HFC dans le circuit de lubrification d'un système de réfrigération existant qui soit économiquement plus intéressant, c'est-à-dire plus rapide et moins coûteux notamment en utilisant une quantité moindre de lubrifiant HFC comme fluide de rinçage.

La présente invention a donc pour objet un procédé de remplacement d'au moins un lubrifiant compatible avec le fluide CFC, dit lubrifiant CFC, par au moins un lubrifiant compatible avec le fluide HFC, dit lubrifiant HFC avant le remplacement du fluide CFC par le fluide HFC, ledit procédé comprenant plusieurs étapes de rinçage consistant à vidanger le lubrifiant CFC du circuit de lubrification, puis à remplir ledit circuit par un fluide de rinçage, ensuite à homogénéiser le mélange lubrifiant CFC avec le fluide de rinçage par mise en marche du système de réfrigération, et enfin, éventuellement, à mesurer dans le fluide de rinçage le pourcentage du lubrifiant à éliminer.

Le procédé, objet de l'invention, se caractérise en ce qu'on introduit dans le circuit de lubrification dès le premier rinçage un fluide intermédiaire compatible avec le fluide réfrigérant CFC, apte à solubiliser le lubrifiant CFC et lui-même soluble dans le lubrifiant HFC, que dans une étape ultérieure de rinçage, on substitue à ce dit fluide intermédiaire ledit lubrifiant HFC, lorsque la teneur en lubrifiant CFC dans le fluide intermédiaire est égale ou inférieure à 15% et enfin on stoppe les rinçages par le lubrifiant HFC, lorsque que la teneur du fluide intermédiaire dans le lubrifiant HFC est inférieure ou égale à 5%.

Comme chaque circuit de lubrification se vidange toujours de la même façon, il est aisé de mesurer son taux de vidange T ; de même, on pourra aisément déterminé le nombre de rinçages x nécessaires par le fluide de rinçage selon la formule :

$T^x \leq A$ avec $A=0,01$ lorsqu'il s'agit de calculer le nombre de rinçage $X=X_0$ par le lubrifiant HFC seul permettant d'obtenir une teneur résiduelle du lubrifiant CFC de 1% dans le lubrifiant HFC et $A=0,15$ lorsqu'il s'agit de calculer le nombre de rinçage $X=X_1$ par le fluide intermédiaire avant son remplacement par le lubrifiant HFC.

Dans la présente invention, $X_2$, le nombre de rinçages par le lubrifiant HFC nécessaire afin d'éliminer le fluide intermédiaire est inférieur ou égal à $(X_0-X_1)$, $X_2$ étant définitivement connu lorsque la mesure du pourcentage du fluide intermédiaire dans le lubrifiant HFC, après étape d'emplissage finale, donne une valeur $\leq 5\%$

Il est ainsi à la portée de l'homme du métier d'optimiser le nombre de rinçages nécessaires en vue de limiter le nombre de rinçages $X_1$ au moyen du fluide intermédiaire et le nombre de rinçages $X_2$ au moyen du lubrifiant HFC.

Le fluide intermédiaire sera choisi parmi les substances compatibles avec les lubrifiants CFC et HFC, dont la viscosité est comprise entre 5 et 40 mPa/s à 40°C, et de préférence parmi celles dont la viscosité est comprise entre 10 et 25 mPa/s. Compte tenu du fait que pendant les étapes de rinçage, dans le cadre de la présente invention, il est amené à jouer le rôle de lubrifiant pendant les remises en marche du système de réfrigération pour l'homogénéisation du mélange fluide de rinçage/lubrifiant résiduel après vidange, il présente les caractéristiques d'une base lubrifiante. Ainsi, ce fluide intermédiaire est caractérisé par une empreinte mesurée en 4 billes usure selon la norme NFT 48617 comprise entre 0,40 et 0,50 mm et par un film de frottement déterminé par le test dit de Cameron Plint (essai de frottement aluminium-acier sur tribomètre alternatif), comparable à ceux obtenus pour les lubrifiants HFC.

Plus précisément, pour la présente invention, le fluide intermédiaire est constitué par au moins un composé choisi dans le groupe constitué par les alkylbenzènes à chaînes linéaires ou ramifiées, ces chaînes comprenant de 4 à 25 atomes de carbone, ces dits alkylbenzènes ayant une vicosité inférieure à 40 mPa/s. On notera ici que les alkylbenzènes de viscosité supérieure à 40mPa/s, usuellement utilisés dans les systèmes de réfrigération avec un fluide CFC, ne peuvent convenir comme fluide intermédiaire dans la mise en oeuvre de la présente invention. Par ailleurs, contrairement aux idées développées dans l'état de la technique, il a été constaté que le taux résiduel de ces alkylbenzènes ne peut être supérieur à 1% dans le lubrifiant HFC.

En outre, dans la réalisation de l'invention, le fluide intermédiaire ne doit pas être à l'origine de phénomènes d'usure ou de corrosion. Aussi, il peut contenir avantageusement de 0,01 à 5% en poids, et de préférence de 0,5 à 2% en poids d'un additif antiusure choisi dans le groupe constitué par les esters acides phosphoreux ou phosphoriques, les dialkylphosphites tels que le diphénylphosphite, le dioctylphosphite et le diméthyl phosphite, et les trialkylphosphites tels que le trinonylphosphite et le tributylphosphite.

De même, dans le cadre de la présente invention, le fluide peut contenir de 0,05 à 0,5% en poids, et de préférence entre 0,05 et 0,2% en poids d'au moins un inhibiteur de corrosion choisi dans le groupe constitué par l'imidazole, le benzimidazole, le pyrazole, le benzotriazole, le tolutriazole, le 2-méthylbenzimidazole et le méthylène bis-benzotriazole.

Le fait d'utiliser des alkylbenzènes est un gros avantage en soit, car ils sont facilement accessibles et peu chers tout en présentant toutes les qualités requises pour jouer le rôle de fluide intermédiaire du fait de leur bonne solubilité dans les lubrifiants HFC et leur bon pouvoir solvant vis à vis des lubrifiants CFC utilisés.

Un autre avantage lié à l'utilisation des alkylbènes selon l'invention, est de diminuer substantiellement les temps d'homogénéisation dans chaque étape de rinçage. Ainsi, ce temps d'homogénéisation est compris entre 5 et 24 heures selon le système de réfrigération, et de préférence compris entre 10 et 18 heures, ce qui est déjà inférieur aux 24 heures actuellement requises pour les étapes de rinçage par le lubrifiant HFC seul.

Les exemples ci-après sont donnés à titre non limitatif pour expliciter les caractéristiques de la présente invention.

## EXEMPLE 1

Le présent exemple décrit la mise en oeuvre du procédé de l'invention, c'est-à-dire le remplacement d'un lubrifiant CFC par un lubrifiant HFC, dans un système de réfrigération fonctionnant comme un cycle de Carnot. Il cherche en outre à comparer la méthode classique utilisant le lubrifiant HFC comme fluide de rinçage et le procédé selon l'invention avec l'utilisation d'un fluide de rinçage différent du lubrifiant HFC.

Ce système de réfrigération comprend un compresseur relié d'un côté par un premier conduit à un condenseur fonctionnant entre 50 et 100°C, lui-même en communication par un second conduit à un détendeur, relié par un troisième conduit à l'évaporateur permettant d'accéder à des températures de -25 à -10°C, l'évaporateur étant lui-même raccordé au compresseur par un quatrième et dernier conduit. Le fluide réfrigérant circulant dans ce circuit fermé est mis en contact avec le lubrifiant au niveau du compresseur ce qui explique l'entraînement d'une partie du lubrifiant dans ce circuit et la nécessité de celui-ci d'être miscible dans le fluide réfrigérant, notamment au moment du passage à l'état gazeux de ce dernier dans l'évaporateur, où les températures sont comprises entre -25 et -10°C.

Avant de procèder au premier rinçage, c'est-à-dire à la vidange du lubrifiant CFC, ici une huile minérale naphténique de viscosité à 40°C égale à 32 mPa/s, le système de réfrigération, communément appelé groupe, est mis en fonctionnement jusqu'à l'obtention de l'équilibre vers - 10°C, qui sera maintenu pendant 3 ou 4 heures. A l'arrêt du groupe, lorsque le fluide CFC est ramené au condenseur, on isole le compresseur du reste de l'installation, on ramène sa pression à la pression atmosphérique et alors seulement on vidange le lubrifiant CFC.

Le bouchon de vidange étant remis en place, on va introduire successivement le fluide intermédiaire, ici un alkylbenzène de viscosité à 40°C égale à 22 mPa/s, puis, dès que nécessaire, le lubrifiant HFC, ici un ester de polyol de viscosité à 40°C égale à 22 mPa/s, commercialisé par Elf Lubrifiant sous le nom de PLANETELF ACD22 AW.

L'élimination de l'air et de l'humidité pouvant s'être introduits dans le circuit de lubrification est realisée en faisant le vide dans ce dernier. Après avoir relié le circuit à un réservoir contenant la quantité de fluide de rinçage nécessaire, on le remplit de nouveau par aspiration du fluide en utilisant la dépression précédemment créée dans le compresseur. Le groupe est remis en fonctionnement pendant 24 heures selon la méthode classique ou 12 heures selon l'invention puis, de nouveau, est arrêté. On procède comme décrit ci-dessus pour vidanger et remplir le circuit de lubrification. Plusieurs rinçages sont ainsi effectués avant la dernière étape de remplissage par le lubrifiant HFC.

Le tableau 1 ci-après regroupe l'évolution des concentrations du lubrifiant CFC, du fluide intermédiaire, et du lubrifiant HFC au cours de l'étape d'homogénéisation des différents cycles de rinçage lorsque le remplacement du lubrifiant se fait selon la méthode classique ou selon le procédé selon l'invention.

TABLEAU 1

| METHODE CLASSIQUE | | | | | |
|---|---|---|---|---|---|
| Rinçage n° | 1 | 2 | 3 | 4 | 5 |
| Lubrifiant CFC (%) | 40 | 18 | 8,1 | 3,6 | 1,0 |
| Fluide intermédiaire (%) | 0 | 0 | 0 | 0 | 0 |
| Lubrifiant HFC (%) | 60 | 82 | 91,9 | 96,4 | 99 |
| PROCEDE SELON L'INVENTION | | | | | |
| Rinçage n° | 1 | 2 | 3 | 4 | 5 |
| Lubrifiant CFC (%) | 36 | 14,5 | 5,3 | 1,4 | 0,3 |
| Fluide intermédiaire (%) | 64 | 85,5 | 30,3 | 14,5 | 5,0 |
| Lubrifiant HFC (%) | 0 | 0 | 64,4 | 84,1 | 94,7 |

On constate que, grâce au fluide intermédiaire, moins de trois charges de lubrifiant HFC sont nécessaires pour purger le circuit de lubrification du lubrifiant CFC, ce qui permet une économie d'environ deux charges et demie par rapport à la méthode classique, et ceci en diminuant le temps de l'opération de remplacement des lubrifiants.

De plus, le mélange lubrifiant résultant du remplacement par le procédé selon l'invention donne une meilleure miscibilité à une température comprise entre -25 et -10°C dans le fluide frigorigène R134a (voir tableau 2 ci-dessous), que le mélange lubrifiant HFC contenant 1% de lubrifiant CFC, et ce quelle que soit la concentration de ce lubrifiant dans le fluide frigorigène HFC.

TABLEAU 2

| Rapport Lubrifiant/R134a en volume | 10/90 | 20/80 | 30/70 | 40/60 |
|---|---|---|---|---|
| Lubrifiant HFC + 1% Lubrifiant CFC | -10°C | -5°C | -4°C | -11°C |
| Lubrifiant HFC | -13°C | -11°C | -11°C | -14°C |

TABLEAU 2   (suite)

| Rapport Lubrifiant/R134a en volume | 10/90 | 20/80 | 30/70 | 40/60 |
|---|---|---|---|---|
| + 5% Fluide intermédiaire | | | | |

EXEMPLE 2

Le présent exemple vise à distinguer les alkylbenzènes selon l'invention de ceux usuellement utilisés comme lubrifiant CFC

Le tableau 3, ci-après, regroupe les températures de miscibilité du lubrifiant HFC dans le fluide frigorigène R134a lorsque celui-ci est seul et lorsqu'il contient 5% d'alkylbenzène selon l'invention, ici de l'alkylbenzène iso 22 de viscosité à 40°C égale à 22 mPa/s, ou 5% d'alkylbenzène iso 100 de viscosité à 40°C égale à 100 mPa/s.

TABLEAU 3

| Rapport Lubrifiant/R143a en volume | | 10/90 | 20/80 | 30/70 | 40/60 |
|---|---|---|---|---|---|
| 100% | Lubrifiant HFC | -31°C | -23°C | -22°C | -23°C |
| 95% + 5% | Lubrifiant HFC Alkylbenzène ISO 100 | +1°C | +1°C | -4°C | -9°C |
| 95% + 5% | Lubrifiant HFC Fluide de rinçage ISO 22 | -13°C | -11°C | -11°C | -14°C |

On constate que, pour maintenir une bonne miscibilité du lubrifiant dans le fluide HFC au niveau de l'évaporateur, c'est-à-dire à des températures comprises entre -25 et -10°C, on ne peut utiliser que les alkylbenzènes selon l'invention et non ceux utilisés usuellement comme lubrifiant CFC.

## Revendications

1. Procédé de remplacement d'au moins un lubrifiant dit CFC, compatible avec les fluides frigorigènes chlorofluorocarbonés, par au moins un lubrifiant dit HFC compatible avec les fluides frigorigènes hydrofluorocarbonés, avant le remplacement du fluide CFC par le fluide HFC dans un système de réfrigération, ledit procédé comprenant plusieurs étapes de rinçage consistant à vidanger le lubrifiant présent dans le circuit de réfrigération, puis à remplir ledit circuit par un fluide de rinçage, ensuite à homogénéiser le mélange lubrifiant CFC résiduel avec ledit fluide de rinçage par mise en marche du système de réfrigération, et enfin, éventuellement, à mesurer dans le fluide de rinçage le pourcentage du lubrifiant à éliminer, ledit procédé étant caractérisé en ce qu'on introduit dès le premier rinçage, un fluide intermédiaire compatible avec le fluide CFC, apte à solubiliser le lubrifiant CFC et lui-même soluble dans le lubrifiant HFC, que, dans une étape ultérieure, on substitue le lubrifiant HFC au fluide intermédiaire, de préférence lorsque la teneur du lubrifiant CFC dans le fluide intermédiaire est inférieure ou égale à 15%, et qu'on stoppe les rinçages par le lubrifiant HFC lorsque la teneur du fluide intermédiaire dans le lubrifiant HFC est inférieure ou égale à 5%.

2. Procédé selon la revendication 1, caractérisé en ce qu'on détermine le nombre de x rinçages par le fluide de rinçage, au moyen de la formule

$$T^x \leq A \; ; \; X = X_0, \; X_1 \text{ ou } X_2 \; ;$$

avec T égal au taux de vidange du circuit de réfrigération, A = 0,01 pour calculer $X = X_0$, le nombre de rinçages par le lubrifiant HFC seul et A = 0,15 pour calculer $X = X_1$, le nombre de rinçages par le fluide intermédiaire, le nombre $X_2$ de rinçages avec le lubrifiant HFC substitué au fluide intermédiaire étant égal ou inférieur à $(X_0 - X_1)$.

3. Procédé selon l'une des revendications de 1 à 2, caractérisé en ce que le fluide intermédiaire a une viscosité comprise entre 5 et 40 mPa/s à 40°C, et de préférence comprise entre 10 et 25 mPa/s.

4. Procédé selon l'une des revendications de 1 à 3, caractérisé en ce que le fluide intermédiaire est une base lubrifiante dont l'empreinte mesurée en 4 billes usure selon la norme NFT 48617 est comprise entre 0,40 et 0,50mm et qui, au test Cameron Plint donne un film de frottement comparable à ceux obtenus pour les lubrifiants HFC.

5. Procédé selon l'une des revendications de 1 à 4, caractérisé en ce que le fluide intermédiaire est constitué par au moins un composé choisi dans le groupe constitué par les alkylbenzènes à chaînes linéaires ou ramifiées comprenant de 4 à 25 atomes de carbone et de viscosité inférieure à 40 mPa/s à 40 °C.

6. Procédé selon l'une des revendications de 1 à 5, caractérisé en ce que le fluide intermédiaire contient de 0,01 à 5% en poids, et de préférence de 0,05 à 2% en poids d'au moins un additif anti-usure choisi dans le groupe constitué par les esters acides phosphoreux ou phosphoriques, les dialkylphosphites tels que le diphénylphosphite, le dioctylphosphite et le diméthylphosphite et les trialkylphosphites tels que le trinonylphosphite et le tributylphosphite.

7. Procédé selon l'une des revendications de 1 à 6, caractérisé en ce que le fluide intermédiaire contient de 0,005 à 0,5 % en poids , et de préférence entre 0,05 et 0,2 % en poids d'au moins un inhibiteur de corrosion choisi dans le groupe constitué par 1' imidazole, le benzimidazole, le pyrazole, le benzotriazole, le tolutriazole, le 2-méthyllbenzimidazole et le méthylène bis-benzotriazole.

8. Procédé selon l'une des revendications de 1 à 7, caractérisé en ce que le temps d'homogénéisation pendant chaque étape de rinçage est compris entre 5 et 24 heures, et de préférence compris entre 10 et 18 heures.

## Patentansprüche

1. Verfahren zum Ersatz wenigstens eines als CFC bezeichneten Schmiermittels, das mit Chlorfluorkohlenwasser-stoff-Kältemitteln verträglich ist, durch wenigstens ein als HFC bezeichnetes Schmiermittel, das mit Hydrofluorkohlenwasserstoff-Kältemitteln verträglich ist, vor dem Ersatz des CFC-Kühlmittels durch das HFC-Kühlmittel in einem Kühlsystem, wobei das Verfahren mehrere Spülungsstufen umfaßt, die darin bestehen, daß man das im Kühlkreislauf enthaltene Schmiermittel abläßt, danach den Kreislauf mit einem Spülmittel füllt, anschließend das restliche CFC-Schmiermittelgemisch mit dem Spülmittel durch Einschalten des Kühlsystems homogenisiert und schließlich gegebenenfalls im Spülmittel den Prozentanteil des zu entfernenden Schmiermittels mißt, dadurch **gekennzeichnet**, daß man während der ersten Spülung ein mit dem CFC-Kühlmittel verträgliches intermediäres Kühlmittel zusetzt, das das CFC-Schmiermittel zu solubilisieren vermag und im HFC-Schmiermittel löslich ist, man auf einer nachfolgenden Stufe das intermediäre Kühlmittel durch das HFC-Schmiermittel, vorzugsweise dann, wenn der Gehalt des CFC-Schmiermittels im intermediären Kühlmittel unter 15% liegt oder diesem Wert entspricht, ersetzt und man die Spülungen mit dem HFC-Schmiermittel einstellt, wenn der Gehalt an intermediärem Kühlmittel im HFC-Schmiermittel unter 5% liegt oder diesem Wert entspricht.

2. Verfahren nach Anspruch 1, dadurch **gekennzeichnet**, daß man die Zahl X der Spülungen mit dem Spülmittel mit Hilfe der Formel

$$T^x \leq A,$$

wobei $X = X_0$, $X_1$ oder $X_2$ ist,

T dem Grad der Entleerung des Kühlkreislaufs entspricht und
A den Wert 0,01 aufweist, um die Zahl der Spülungen mit dem HFC-Schmiermittel allein ($X = X_0$) zu berechnen, bzw. A den Wert 0,15 aufweist, um die Zahl der Spülungen mit dem intermediären Kühlmittel ($X = X_1$) zu berechnen, wobei die Zahl $X_2$ der Spülungen mit dem das intermediäre Kühlmittel ersetzenden HFC-Schmiermittel gleich dem Wert ($X_0$-$X_1$) ist oder darunter liegt, bestimmt.

3. Verfahren nach einem der Ansprüche 1 und 2, dadurch **gekennzeichnet**, daß das intermediäre Kühlmittel eine Viskosität zwischen 5 und 40 mPa/s bei 40°C und vorzugsweise zwischen 10 und 25 mPa/s aufweist.

4. Verfahren nach einem der Ansprüche 1 bis 3, dadurch **gekennzeichnet**, daß das intermediäre Kühlmittel eine Schmiermittelbasis mit einem Eindruck, gemessen mit Hilfe der Vierkugelverschleißprüfung gemäß der Norm NFT 48617, zwischen 0,40 und 0,50 mm ist, die bei der Cameron Plint-Prüfung einen Reibungsfilm ergibt, der mit den Reibungsfilmen vergleichbar ist, die mit den HFC-Schmiermitteln erhalten werden.

**5.** Verfahren nach einem der Ansprüche 1 bis 4, dadurch **gekennzeichnet**, daß das intermediäre Kühlmittel wenigstens aus einer Verbindung, ausgewählt aus der Gruppe, bestehend aus Alkylbenzolen mit unverzweigten oder verzweigten Ketten mit 4 bis 25 C-Atomen und einer Viskosität von unter 40 mPa/s bei 40°C besteht.

**6.** Verfahren nach einem der Ansprüche 1 bis 5, dadurch **gekennzeichnet**, daß das intermediäre Kühlmittel 0,01 bis 5 und vorzugsweise 0,05 bis 2 Gew.-% wenigstens eines Verschleißminderers, ausgewählt aus der Gruppe, bestehend aus Phosphor- oder Phosphorigsäureestern, Dialkylphosphiten wie Diphenyl-, Dioctyl- und Dimethylphosphit und Trialkylphosphiten wie Trinonyl- und Tributylphosphit, enthält.

**7.** Verfahren nach einem der Ansprüche 1 bis 6, dadurch **gekennzeichnet**, daß das intermediäre Kühlmittel 0,005 bis 0,5 und vorzugsweise 0,05 bis 0,2 Gew.-% wenigstens eines Korrosionsinhibitors, ausgewählt aus der Gruppe, bestehend aus Imidazol, Benzimidazol, Pyrazol, Benzotriazol, Tolutriazol, 2-Methylbenzimidazol und Methylen-bis-benzotriazol, enthält.

**8.** Verfahren nach einem der Ansprüche 1 bis 7, dadurch **gekennzeichnet**, daß die Dauer der Homogenisierung auf jeder Spülstufe 5 bis 24 Stunden und vorzugsweise 10 bis 18 Stunden beträgt.

## Claims

**1.** A method of replacing at least one so-called CFC lubricant compatible with chlorofluorocarbon refrigerant fluids with at least one so-called HFC lubricant compatible with hydrofluorocarbon refrigerant fluids before the CFC fluid is replaced by the HFC fluid in a refrigeration system, the said method comprising a plurality of rinsing steps consisting of draining the lubricant present in the refrigeration circuit, then filling the said circuit with a rinsing fluid, then homogenizing the residual CFC lubricant mixture with the said rinsing fluid by putting the refrigeration system into operation and, finally, possibly, measuring the percentage, in the rinsing fluid, of the lubricant to be eliminated, the said method being characterized in that an intermediate fluid compatible with the CFC fluid, suitable for solubilizing the CFC lubricant and itself soluble in the HFC lubricant, is introduced from the very first rinse and, in a further step, the HFC lubricant is substituted for the intermediate fluid, preferably when the CFC lubricant content in the intermediate fluid is less than or equal to 15%, and in that the rinses with the HFC lubricant are stopped when the content of the intermediate fluid in the HFC lubricant is less than or equal to 5%.

**2.** A method according to Claim 1, characterized in that the number x of rinses with the rinsing fluid is determined by means of the formula

$$T^x \leq A; \quad x = X_0, X_1 \text{ or } X_2;$$

where T is the degree of emptying of the refrigeration circuit, A = 0.01 in order to calculate $x = X_0$, the number of rinses with the HFC lubricant alone, and A = 0.15 in order to calculate $x = X_1$, the number of rinses with the intermediate fluid, the number $X_2$ of rinses with the HFC lubricant substituted for the intermediate fluid being equal to or less than $(X_0 - X_1)$.

**3.** A method according to one of Claims 1 to 2, characterized in that the intermediate fluid has a viscosity of between 5 and 40 mPa/s at 40°C, and preferably between 10 and 25 mPa/s.

**4.** A method according to any one of Claims 1 to 3, characterized in that the intermediate fluid is a lubricant base of which the indentation measured in 4 wear balls in accordance with NFT (French standard) 486107 is between 0.40 and 0.50 mm and which, in the Cameron Plint test gives a friction film comparable to those obtained for HFC lubricants.

**5.** A method according to any one of Claims 1 to 4, characterized in that the intermediate fluid is constituted by at least one compound selected from the group constituted by alkylbenzenes with linear or branched chains comprising from 4 to 25 carbon atoms and having viscosity less than 40 mPa/s at 40°C.

**6.** A method according to any one of Claims 1 to 5, characterized in that the intermediate fluid contains from 0.01 to 5% by weight, and preferably from 0.05 to 2% by weight, of at least one anti-wear additive selected from the group constituted by phosphorous or phosphoric acid esters, dialkyl phosphites such as diphenyl phosphite, dioctyl phosphite and dimethyl phosphite, and trialkyl phosphites such as trinonyl phosphite and tributyl phosphite.

7.  A method according to any one of Claims 1 to 6, characterized in that the intermediate fluid contains from 0.005 to 0.5% by weight, and preferably between 0.05 and 0.2% by weight, of at least one corrosion inhibitor selected from the group constituted by imidazole, benzimidazole, pyrazole, benzotriazole, tolutriazole, 2-methylbenzimidazole and methylene bis-benzotriazole.

8.  A method according to any one of Claims 1 to 7, characterized in that the homogenization time during each rinsing step is between 5 and 24 hours and preferably between 10 and 18 hours.